# EUROPEAN PATENT APPLICATION

(11) **EP 2 206 833 A1**
(43) Date of publication of application: **14.07.2010**
(21) Application number: 09171627.4
(22) Date of filing: 29.09.2009
(51) Int. Cl.: E01C 13/08

(54) **A method of producing an infill material for synthetic-grass structures, corresponding material, and synthetic grass structure**

(30) Priority: 12.01.2009 IT TO20090012
(71) Applicant: Mondo S.p.A., 12051 Alba Frazione Gallo (CN) (IT)
(72) Inventor: Stroppiana, Fernando, 12060 Grinzane Cavour (Cuneo) (IT)
(74) Representative: Bosotti, Luciano

(57) **Abstract**

A method for producing a particulate infill material for synthetic-grass structures envisages providing (18) a mass of thermoplastic material (14) with a filler consisting of coconut-based material (10) and subjecting (24) said mass of thermoplastic material (14) with the filler consisting of coconut-based material (10) to granulation so as to obtain the aforesaid particulate infill material. Preferentially, the thermoplastic material (14) is in particulate form, and the coconut-based material (10) is in particulate form (fibrous, ground and/or shredded). The mixture obtained by mixing the thermoplastic material (14) and the coconut-based material (14) is preferentially heated in order to bring about softening of the thermoplastic material (14) with the corresponding formation of a matrix of thermoplastic material that incorporates the coconut-based material (4) as filler.

## Description

### Field of the invention

The present invention relates to filling materials or infill for synthetic-grass structures and to the corresponding synthetic-grass structures.

### Description of the prior art

The document No. EP-A-1 158 099 describes a particulate infill material for synthetic-grass structures constituted by a substantially homogeneous mass of a granular material chosen in the group constituted by polyolefin-based materials and by vinyl-polymer-based materials.

The solution described in said document has formed the subject of numerous developments, disclosed, for example, in documents such as EP-A-1 371 779, EP-A-1 375 750, EP-A-1 319 753, EP-A-1 389 649, EP-A-1 486 613, EP-A-1 555 522, EP-A-1 658 886, EP-A-1 801 292, EP-A-1 803 841, EP-A-1 889 954, EP-A-1 892 331, all filed in the name of the holder of the present application.

Synthetic-grass structures comprising a sheet substrate with a plurality of filiform formations, which extend from the substrate in order to simulate natural turf and a particulate infill material dispersed between the filiform formations so as to keep the filiform formations themselves in a substantially upright condition have been known for some time. A general overview in this regard is found, for example, in the document No. US-A-4 337 283.

Materials such as sand or similar mineral materials were amongst the first to be used as infill for said grass structures.

Linked, however, to the low cost of these infill materials are numerous drawbacks, such as for instance, the marked effect of wear of the filiform formations (usually constituted by synthetic materials, such as polypropylene and various polymers) that simulate blades of natural grass, and the as a whole unsatisfactory biomechanical characteristics. Furthermore, these materials present a hygroscopic behaviour such as to render the characteristics of the structure very sensitive to the degree of humidity (also on account of the possible formation of moist or wet areas and dry areas, with characteristics of tread that are altogether different). Usually, these materials also present an unsatisfactory behaviour in regard to rain water or the like, with the possible formation of areas of stagnant water and/or with the risk of the infill material being washed away by rain water.

To overcome these drawbacks various alternative solutions have been proposed.

A first set of solutions, documented for example by US-A-4 337 283 or US-A-5 958 527, envisages mixing to the sand other theoretically compliant materials. Cited, for example, in US-A-4 337 283 are granules of foamed PVC, granulated cork, shredded foamed polyurethane material, material resulting from ground tyres (the so-called "ground tyre rubber" - GTR), particles of rubber and particles of synthetic polymers. The document US-A-5 958 527 refers to granules of rubber, vermiculite, cork, foamed plastic material, black or coloured EPDM rubber used in combination with sand with a stratified distribution of materials having different compositions. Substantially similar solutions are described in US-A-5 961 389 (however, with reference to a sports structure that is not provided with filiform formations), or US-A-4 735 825, which envisages the addition of cork.

The Japanese document JP-A-32 53 204 describes a stratified filling material comprising a bottom layer of "hard" filling material, such as sand, and a top layer of an elastic filling material constituted by particles of vulcanized rubber, urethane resin, and the like, with a density of from 0.9 to 1.5, lower than the density of the hard filling material constituted by sand.

An intrinsic drawback of the filling materials described previously lies in the fact that they are unhomogeneous materials.

In the case of stratified filling materials, it may be immediately noted that a material initially laid in layers of different composition tends to lose the stratified characteristic as the synthetic-grass structure is used by athletes who run, jump, slide, accelerate or brake (very often using shoes provided with studs), thus exerting an action of displacement and mixing of the infill.

The characteristics of lack of homogeneity also come into play as regards the different values of specific mass/density of the various components. In particular, light materials such as cork or foamed materials (which intrinsically have a low density, for example of from 0.15 g/cm³ to 0.31 g/cm³, as described in US-A-4 337 283) have the tendency to float on rain water and hence to displace with respect to their original position of laying. The phenomenon is rendered even more evident if it is taken into account that surfaces for sports activities, such as pitches for playing soccer are made purposely so as to be slightly convex to favour off-flow of rain water: the risk is hence that the central part of the field will be deprived in a more or less short time of the "light" components of the infill, which, floating on the rain water, is gradually washed away towards the sides of the pitch.

Another way to overcome the drawbacks of mineral infill is that of coating the granules. For example, EP-A-0 377 925 describes a filling material made of silica sand with a density of between 1.4 and 1.6 g/cm³ coated with an elastomer or a mixture of elastomers, such as natural rubber, styrene-butadiene rubber or nitrile rubber, or a combination thereof, so that the weight of the coating will account for 0.2%-10% of the weight of the material.

This type of solution to a certain extent solves the problems linked to the abrasive behaviour of the infill, but does not solve the problems linked to the unsatisfactory biomechanical characteristics of the synthetic-grass structures.

A very extensive line of research is linked to the use, as infill for synthetic-grass structures, of recycled tyre material (GTR). This solution has also encountered a considerable commercial success, on account of the wide availability and low cost of the material.

In relation to the use of said material, objections have, however, been raised linked to the protection of the environment: it is in fact material with carbon-black filler in which there is in any case present residue of the carcasses and wires of metal material, which are considered pollutant. Other objections have been raised as regards emission of smells (linked principally to the sulphur released by the material in question) and again in relation to the fact that said infill, on account of its black colour, easily tends to reach very high temperatures, in particular in countries which receive a lot of sunlight. Again, it has been noted that said material tends to present an excessively elastic behaviour, such as to have a negative effect on the biomechanical characteristics of the synthetic-grass structure. Furthermore, in view of the specific weight, which is close to that of water, it is an infill that is in any case exposed to risk of floating on and of being washed away by rain water.

For this reason, documents such as US-A-5 976 645 envisage use of said tyre material in combination with other hard materials, e.g., sand, or compliant materials, e.g., natural or synthetic rubbers. Documents such as US-A-5 958 527 and US-A-4 337 283 envisage mixing or association in some way of said recycled rubber materials with sand so as to compensate for the excessively elastic behaviour.

Yet other documents, such as Nos. US-A-3 731 923 and JP-A-10037122 move in the direction of the use of granules of artificial resins, such as polyester, polypropylene, polyethylene, nylon 6 or nylon 66 (all of which are rather light materials, with a density in the region of 0.75 g/cm³, with evident risk of them floating on rain water), i.e., materials such as urethane resins, synthetic rubbers, natural or vinyl rubbers, and the like, with a density in the region of 1.8 - 3.5 g/cm³.

In this scenario, the solution described in EP-A-1 158 099 has asserted itself as a solution that, preserving the positive aspects in the latter solutions referred to, prevents the drawbacks thereof.

Yet other developments regarding filling materials are documented in WO-A-2006/109110 and WO-2007/010234.

These solutions envisage use as infill of a vegetal material with base of coconut and/or other similar vegetal material in fibrous form, ground and/or shredded,. Said material can be used together with other vegetal materials deriving from the bark of bushes and plants, natural fibre obtained from vegetables, such as agave fibre, in particular sisal, and canapa fibre. There is envisaged the possibility of mixing to the coconut-based material a hard material such as sand, with a possible arrangement in superimposed layers. Also enivsaged is the possibility of mixing with peat or other natural organic materials deriving from vegetal residue, elastic particulate materials such as rubber, porous materials in granular form of volcanic origin, such as volcanic lapilli, pumice stone, and the like.

Solutions of this sort, and similar prior solutions, such as those proposed in DE-U-20309789, draw benefit from the availability of coconut-based materials deriving, for example, from parts of the plant and/or of the fruit of the coconut, i.e., coconut fibre or coconut peat, and from the fact that the material used is a material of natural origin, to which it is possible to attribute a connotation of an "ecological" type.

In any case, this "ecological" nature is widely mitigated by the need to add to the filling material substances which are designed to render the granules fire-repellent and/or to prevent formation of moulds, fungi, and/or bacterial colonies. Laying of said materials moreover implies formation and scattering of powders so that the granules of infill are usually moistened with water so as to dissolve the granules and release the components in the original formula.

In each case, the material obtained is a hygroscopic material (with consequent risk of rendering the biomechanical characteristics of a synthetic-grass structure variable according to the humidity in the atmosphere) and intrinsically hydrophilic, with the consequent risk of remaining in "damp" conditions and consequent packing of the infill for a long time even after rain fall has ceased.

### Object and summary of the invention

The object of the invention is to overcome the intrinsic drawbacks linked to the use of said coconut-based infill materials.

According to the present invention, the above object is achieved thanks to a method having the characteristics recalled in the ensuing claims. The invention also regards a corresponding filling material and a corresponding synthetic-grass structure.

In one embodiment, the solution described herein is based upon the recognition of the fact that, in the solutions so far known, the coconut-based material in the fibrous form, ground and/or shredded, is mixed with other materials in conditions in which the individual ground and/or shredded fibre particle of coconut-based material remains as a whole exposed, and is hence liable to absorb completely humidity and liquids, giving rise to the drawbacks outlined previously. On the other, in one embodiment, the solution described herein envisages that the coconut-based material will be used for providing a filler for a matrix of thermoplastic material such as, for example, a material with polyolefin and/or thermoplastic-elastomer base. In this way, a fair part of the ground and/or shredded fibre particles of the coconut-based material is incorporated in the thermoplastic material (and hence partially or completely coated thereby), which thus performs a function of insulation from the outer environment and of stabilization.

### Brief description of the annexed drawings

The invention will now be described, purely by way of non-limiting example, with reference to the annexed drawings, wherein:
- Figure 1 is a schematic reproduction of an ideal vertical cross section of a synthetic-grass structure as described herein; and
- Figure 2 is a functional block diagram representing a process that can be used for the production of the infill described herein.

### Detailed description of examples of embodiment

Illustrated in the ensuing description are various specific details aimed at furnishing an in-depth understanding of the embodiments. The embodiments can be obtained without one or more of the specific details, or with other methods, components, materials, etc. Other known cases, structures, materials, or operations are not shown or described in detail in order not to obscure the various aspects of the embodiments.

The reference to "one embodiment" within the framework of this description is used to indicate that a particular configuration, structure, or characteristic described in relation to the embodiment is comprised in at least one embodiment. Hence, phrases such as "in one embodiment", that may possibly be present in different points of this description, do not necessarily refer to the same embodiment. In addition, particular conformations, structures, or characteristics can be combined in any adequate way in one or more embodiments.

The references used herein are only applied for convenience and hence do not define the sphere of protection or the scope of the embodiments.

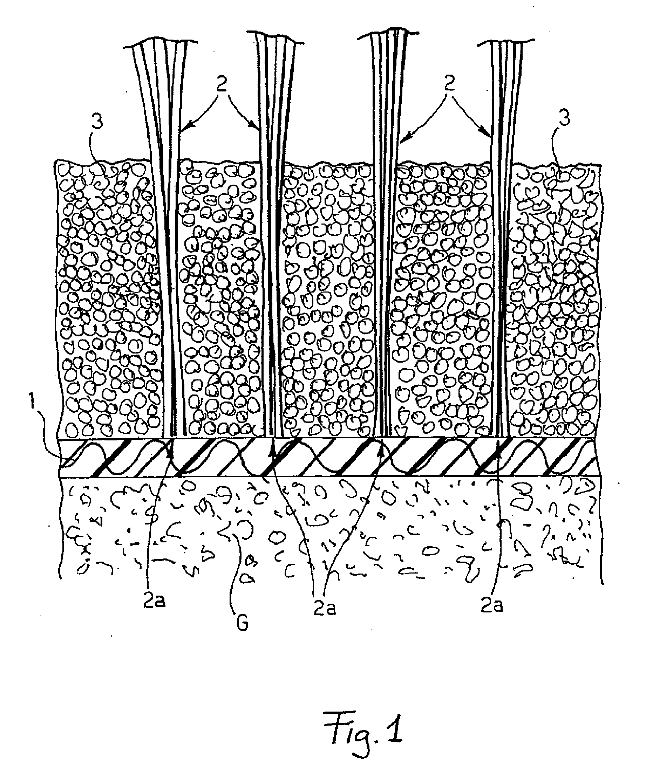

On the basis of an as a whole known solution, a synthetic-grass structure as represented in Figure 1 comprises a sheet substrate 1 designed to be laid on a foundation G. The foundation G may, for example, be a foundation of tamped earth or a foundation of gravel/sand conglomerate, possibly coated with a layer of asphalt, on which the synthetic structure is laid in free-lay conditions.

The sheet substrate 1 (commonly referred to as "backing") can be constituted by a sheet of plastic material, such as, for example, a non-woven fabric treated, for instance, with latexes such as, for instance, SBR latex and/or polyurethane (PU) latex.

Extending upwards starting from the substrate 1 is a plurality of filiform formations 2 usually arranged in tufts so as to better simulate the blades of grass of a natural turf.

The filiform formations 2 are anchored to the substrate 1 at their proximal ends, designated by 2a, and extend upwards with their distal ends for a total length, measured starting from the general plane of extension of the substrate 1, which can range, for example, from 15 to 70 mm, according to the applications.

The general criteria of production of the substrate 1 and of the filiform formations 2 (including the modes for obtaining firm anchorage of the proximal ends 2a of the filiform formations 2 to the substrate 1) are known to the art and hence do not require a detailed description herein, also because they are in themselves not important for the purposes of an understanding of the invention.

In the stage of laying of the synthetic-grass structure, scattered over the substrate 1, hence between the filiform formations 2, is a particulate material 3, which functions as infill. The function of the material 3 is substantially that of keeping the filiform formations 2 in an upright condition, preventing them from lying down flat in an undesirable way on the substrate 1.

The particulate material 3 is dispersed between the filiform formations 2 in an amount sufficient to cause the distal stretches of the filiform formations 2 to be supported by the infill material 3 for a length such that the distal ends of the filiform formations 2 project starting from the top surface of the layer of infill 3 for a length in the region of 5 - 20 mm.

In the examplary of embodiment considered herein, the particulate material (or granular material, the two terms being here used as substantially equivalent) 3 is a homogeneous material, formed by granules that are substantially the same as one another, in so far as they result from granulation of a mass of thermoplastic material containing a filler consisting of coconut-based material, as will be described more fully hereinafter.

In a form of use, the particulate material 3 is dispersed over the substrate 1 and between the filiform formations 2 in a substantially uniform way, without giving rise to superimposed layers having differentiated characteristics.

The particulate infill described herein is suited on the other hand to being used also in synthetic-grass structures in which:
- the infill is distributed in layers, with at least one layer comprising a material with a filler consisting of coconut-based material as described herein, for example superimposed on a layer of sand with a stabilizing or ballasting function; and/or
- the material with a filler consisting of coconut-based material as described herein is mixed with a different particulate material such as, for example, GTR of rubber coated with polyurethane.

The term "coconut-based material" is used in this context in its widest meaning and comprises, for example, parts of the plant (e.g., the bark) and/or of the coconut fruit (coconut shell, husk, pulp), coconut fibre, and the so-called "cocopeat". The materials obtained from the coconut shells, coconut fibres, cocopeat and all the other materials referred to above can be used mixed with one another. These coconut-based materials are habitually identified, in general, as "coir products".

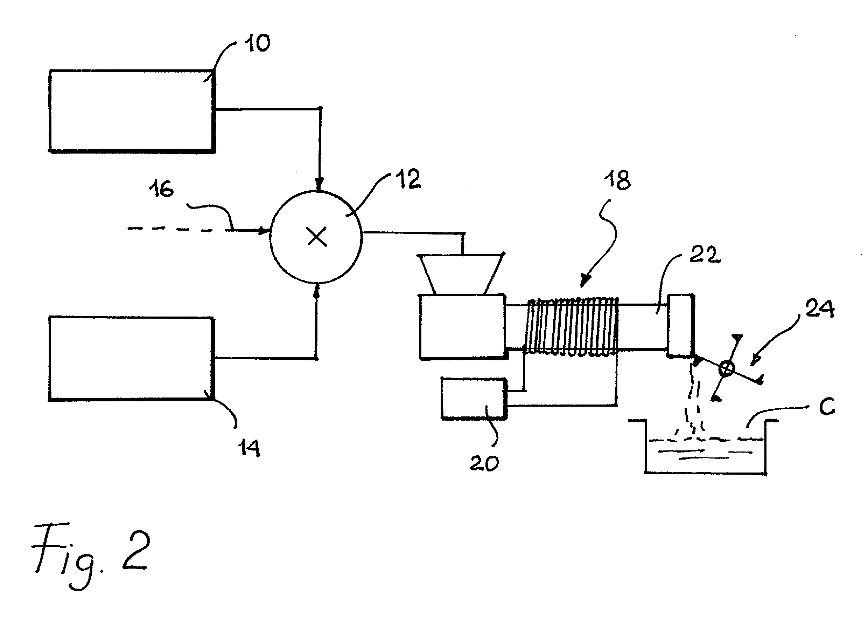

In the block diagram of Figure 2, the reference number 10 designates any known source of coconut-based material.

In one embodiment, the source 10 can be a machine supplied with pressed bricks with base of coconut material, which is able to fragment/shred said bricks. In one embodiment, the source 10 can be a dispenser of coconut-based material already supplied in granular form.

For example, the material resulting from fragmentation of the bricks i.e., the granular material already available as such can present a grain-size distribution of the type:
0 mm - 1 mm: 25 - 30%
1 mm - 3 mm: 40 - 60%
3 mm - 5 mm: 10 - 25%

The source 10 supplies said material in granular form (fibrous, ground, chopped, and/or shredded) to a mixer 12, which, in one embodiment, performs a first action of heating of the mixed material. The mixer 12 is also supplied starting from another source 14 (which is also of a known type) with a thermoplastic material such as, for example, material chosen in the group constituted by polyolefin-based materials (e.g., polyethylene, polypropylene) and/or SBS or SEBS thermoplastic elastomers (or, in general, thermoplastic elastomers according to the ISO 18064 standard).

The reference number 16 designates a further channel through which the mixer 12 can receive yet other components (for example, mineral fillers, such as calcium carbonate, pigments, etc.) that are to be added to the thermoplastic material 14 and to the coconut-based material 10 for providing a mixture that is to be supplied to an extruder 18, provided with heating means (of a known type) designated as a whole by 20.

In the extruder 18 (or functionally equivalent device) the heterogeneous mixture coming from the mixer 12 is heated (or continues to be heated) within a range of temperatures in which melting (softening) of the thermoplastic material 14 is obtained, said mixture being also subjected to compacting.

For example, the aforesaid temperatures can range from 100 to 130 °C. The overall result is hence that of giving rise to a mass (matrix) of thermoplastic material, which englobes the particles of coconut-based material.

As a result of the englobing effect, the coconut-based material is also brought to temperatures (in general higher than 100°C) that to all effects amount sterilization temperatures, capable of eliminating agents that could lie at the basis of formation of moulds, fungi, and bacterial colonies, this without having to resort to the addition of chemical agents that adversely affect the "ecological" nature of the infill.

The mass of thermoplastic material that incorporates the coconut-based material as filler is then subjected to an operation of granulation. In one embodiment, this occurs preferentially after a cooling step 22, such as to bring about an at least substantial consolidation of the aforesaid mass of thermoplastic material.

The operation of granulation can be obtained, for example, via a rotating cutter 24 (which is also of a known type, as the other components of the system schematically represented in Figure 2, and is hence such as to not require any detailed description herein).

In one embodiment, the granulation can occur in a number of stages, with a first coarser fragmentation at output from the extruder 18 and a subsequent grinding and screening.

The granular material thus obtained can be collected in a container C, starting from which the material itself can be packaged (for example in big bags) so that they can be stored and transferred to the site where it is to be laid so that it can be then "sown" in order to form a synthetic-grass structure, which is represented as a whole in Figure 1.

It will be appreciated that the granular infill thus obtained has substantial characteristics of homogeneity in so far as each granule is constituted by a thermoplastic material with a filler consisting of coconut-based material (and with other possible fillers/additives). Albeit with the variations of grain size linked to the production process, each granule is hence as a whole identical to the other granules. In particular, the passage in temperature and the consequent softening/melting of the thermoplastic material bring about at least partial englobing of the coconut-based filler by the matrix of thermoplastic material. The component of coconut-based material is hence at least partially coated by thermoplastic material.

By way of example, a possible formation expressed in terms of weight percentages of the mixture supplied starting from the mixer 12 to the extruder 18 is the following:
- thermoplastic material: 20-40 wt%
- coconut-based material: 10-25 wt%
- filler mineral (e.g. CaCO₃): 45-55 wt%
- additives (plastifiers, antistatic additives): 5-10 wt%
- pigments: 2- 4 wt%.

The material produced by granulation starting from the mass with filler formed in the extruder 18 is markedly less hygroscopic than a material presenting the same composition in weight but in which the coconut-based material is simply mixed with the thermoplastic material (in a heterogeneous mixture of different granules: for example, granules of coconut-based materials mixed with granules of thermoplastic material) and not incorporated therein as filler.

For immediate reference, the present applicant has conducted comparative tests regarding the absorption of water by comparing the values of water absorption of:
- A) a (heterogeneous) mixture corresponding to the composition in weight described previously; and
- B) a (homogeneous) granular material obtained from the granulation of the mass of thermoplastic material with filler consisting of coconut-based material obtained from such a mixture.

In other words, the values of water absorption of the mixture of the components supplied to the mixer 12, on the one hand, and of the granular material resulting from the granulation at output from the extruder 18, on the other, were compared.

The tests were conducted on respective 100-g specimens, gradually adding water up to saturation of the power of absorption of the specimen.

In the case of the mixture of point A), the saturation was observed after the addition of 160 - 170 g of water.

In the case of the material of point B), the saturation was observed after the addition of 80 - 90 g of water.

The material of point B) hence shows a water absorption equal to approximately one half of the water absorption of the mixture of point A).

Of course, without prejudice to the principle of the invention, the details of construction and the embodiments may vary, even significantly, with respect to what is illustrated herein purely by way of non-limiting example, without thereby departing from the scope of the invention, as defined by the annexed claims.

## Claims

1. A method of producing a particulate infill material for synthetic grass structures, including:
- providing (18) a mass of thermoplastic material (14) including coconut-based material (10) as a filler; and
- subjecting to granulation (24) said mass of thermoplastic material (14) including coconut-based material (10) as a filler, thus obtaining said particulate infill material.

2. The method of Claim 1, including:
- providing (18) said thermoplastic material (14) in a particulate form;
- providing (18) said coconut-based material (10) in a particulate form;
- mixing said thermoplastic material (14) and said coconut-based material (10);
- heating the mixture thus obtained (12) to produce melting of said thermoplastic material (14) with the ensuing formation of said mass of thermoplastic material (14) including coconut-based material (10) as a filler.

3. The method of either of Claim 1 or Claim 2, including incorporating (16) to said mass of thermoplastic material (14) including coconut-based material (10) as a filler further components such as mineral fillers and/or pigments.

4. The method of any of the previous claims, including feeding said thermoplastic material (14) and said coconut-based material (10) to an extruder (18) to produce said mass of thermoplastic material (14) including coconut-based material (10) as a filler.

5. The method of any of the previous claims, including granulating said mass of thermoplastic material (14) including coconut-based material (10) as a filler by means of a cutter unit (24), preferably of the rotary type, with possible subsequent grinding, preferably with screening of the ground material.

6. The method of any of the previous claims, including at least partly cooling (22) said mass of thermoplastic material (14) including coconut-based material (10) as a filler starting from the melting temperature of said thermoplastic material before said granulation (24).

7. The method of any of the previous claims, wherein said thermoplastic material is selected out of the group consisting of polyolefin-based materials, thermoplastic elastomers and combinations thereof.

8. A particulate infill material for synthetic grass structures, said particulate material including a matrix of thermoplastic material (14) filled with coconut-based material (10) with the method of any of Claims 1 to 7.

9. The material of Claim 8, wherein said coconut-based material has a grain size of less than 5 mm and/or the following grain size distribution:
0 mm - 1mm: 25 - 30%
1 mm - 3mm: 40 - 60%
3 mm - 5mm: 10 - 25%

10. A synthetic grass structure including:
- a sheet substrate (1) with a plurality of filiform formations (2) extending from the substrate (1) to simulate natural grass cover, and
- a particulate infill material (3) dispersed between said filiform formations (2) to maintain the filiform formations (2) in an upright condition, said particulate material including a material according to either of Claim 8 or Claim 9.

11. The synthetic grass structure of Claim 10, wherein said particulate infill material is completely comprised of a material according to either of Claim 8 or Claim 9.

12. The synthetic grass structure of Claim 10, wherein:
- said particulate infill is arranged in layers, with at least one layer including a material according to either of Claim 8 or Claim 9; and/or
- the material according to either of Claim 8 or Claim 9 is admixed with a particulate material different therefrom.
